# FASCICULE DE BREVET EUROPEEN

(11) **EP 3 513 512 B1**
(45) Date de publication et mention de la délivrance du brevet: **19.02.2025**
(21) Numéro de dépôt: 17771792.3
(22) Date de dépôt: 11.09.2017
(51) Int. Cl.: H04B 10/116, F21S 8/02, F21V 21/04, F21V 23/00, F21V 29/80, F21Y 115/10, H05B 47/19

(54) **ENSEMBLE DE TÉLÉCOMMUNICATION SANS FIL COMPACT**
KOMPAKTE DRAHTLOSTELEKOMMUNIKATIONSANORDNUNG
COMPACT WIRELESS TELECOMMUNICATION ASSEMBLY

(30) Priorité: 13.09.2016 FR 1658544
(43) Date de publication de la demande: 24.07.2019
(73) Titulaire: Lucibel SA, 76770 Le Houlme (FR)
(72) Inventeur: POULAIN, Emilie, 76120 Le Grand Quevilly (FR); BOINET Loïc, 76240 Le Mesnil Esnard (FR)
(74) Mandataire: Martin, Marie-Aude
(86) Numéro de dépôt international: PCT/FR2017/000164
(87) Numéro de publication internationale: WO 2018/050973

(56) Documents cités:
- US-A1- 2014 265 920
- US-A1- 2014 270 793
- US-A1- 2015 188 631
- STEFAN SCHMID ET AL: "EnLighting: An Indoor Visible Light Communication System Based on Networked Light Bulbs", 27 June 2016 (2016-06-27), XP055313206, Retrieved from the Internet <URL:https://s3-us-west-1.amazonaws.com/disneyresearch/wp-content/uploads/20160615205959/EnLighting-An-Indoor-Visible-Light-Communication-System-based-on-Networked-Light-Bulbs-Paper.pdf> [retrieved on 20161024], DOI: 10.1109/SAHCN.2016.7732989
- PEREZ-JIMENEZ R ET AL: "Visible light communication systems for passenger in-flight data networking", CONSUMER ELECTRONICS (ICCE), 2011 IEEE INTERNATIONAL CONFERENCE ON, IEEE, 9 January 2011 (2011-01-09), pages 445 - 446, XP031921322, ISBN: 978-1-4244-8711-0, DOI: 10.1109/ICCE.2011.5722675

## Description

### Domaine technique

La présente invention concerne un ensemble de télécommunication sans fil, et plus particulièrement un ensemble de télécommunication sans fil basé sur la technologie dite LiFi, permettant de transporter des données numériques par modulation de l'intensité d'un signal lumineux.

### État de la technique antérieure

De manière connue, la technologie LiFi (pour Light-Fidelity) permet de transporter des données numériques entre un émetteur LiFi et un récepteur LiFi en utilisant la lumière comme support de télécommunication. De manière plus particulière, cette technologie LiFi consiste à moduler l'intensité lumineuse de la lumière émise par l'émetteur LiFi pour coder des données numériques. En opérant une telle modulation à des fréquences très élevées, les variations d'intensité lumineuse ne sont pas perceptibles par l'œil humain.

L'émetteur LiFi prend typiquement la forme d'une source lumineuse et le récepteur LiFi prend typiquement la forme d'un photorécepteur ou photodétecteur.

Les développements récents des sources lumineuses à base de diodes électroluminescentes, ou LED, ont permis de réaliser des luminaires LiFi unidirectionnels dans lesquels la source à diode électroluminescente est utilisée comme émetteur LiFi afin de transférer des informations vers un récepteur LiFi situé dans la zone d'éclairage de la source à LED. Ces luminaires LiFi trouvent de nombreuses applications grand public telles que la géolocalisation dans des espaces intérieurs et/ou le transfert d'informations à destination d'un utilisateur situé dans la zone d'éclairage. Un inconvénient des luminaires LiFi unidirectionnels est qu'ils ne permettent pas de transférer des données depuis le récepteur LiFi vers l'émetteur LiFi. En particulier, il n'est pas possible pour un utilisateur situé dans la zone d'éclairage d'un tel luminaire LiFi de naviguer sur internet.

On connait aussi des ensembles de communication basés sur la technologie LiFi et bidirectionnels qui associent à l'émetteur LiFi un récepteur infrarouge d'une part, et qui associent au récepteur LiFi une source infrarouge d'autre part. Ces ensembles bidirectionnels rendent possibles le transfert des données numériques de manière ascendante et descendante, c'est-à-dire de l'appareil de l'utilisateur vers le photodétecteur associé à la source de lumière, puis de la source de lumière vers l'appareil de l'utilisateur, permettant ainsi à un utilisateur situé dans la zone d'éclairage de l'émetteur LiFi de naviguer sur internet par exemple en envoyant des requêtes à un serveur via l'ensemble de télécommunication sans fil. L'inconvénient des ensembles LiFi bidirectionnels connus est qu'ils ne sont pas compacts : en particulier, la source infrarouge est située sur un module distinct dudit émetteur LiFi. La mise en place de tels systèmes LiFi bidirectionnels est donc plus fastidieuse et les coûts de fabrication sont aussi plus élevés.

On connaît aussi des lampes à diodes électroluminescentes autorisant une communication par la lumière visible (« Visible Light Communication ») telles que décrites dans les documents « EnLighting : An Indoor Visible Light Communication System Based on Networked Light Bulbs » et « Visible Light Communication Systems for Passenger In-Flight Data Networking ».

On connaît également un luminaire tel que décrit dans le document US2014/0270793 qui illustre le préambule de la revendication 1.

La présente invention a pour objet de répondre au moins en grande partie aux problèmes précédents et de conduire en outre à d'autres avantages.

Un autre but de l'invention est de proposer un nouvel ensemble de télécommunication sans fil pour résoudre au moins un de ces problèmes.

Un autre but de la présente invention est de rendre plus compact un tel ensemble de télécommunication sans fil.

Un autre but de l'invention est de faciliter l'installation d'un tel ensemble de télécommunication sans fil.

### Exposé de l'invention

Selon un premier aspect de l'invention, on atteint au moins l'un des objectifs précités avec un ensemble de télécommunication sans fil comprenant (i) un dispositif d'éclairement pour émettre au moins un rayon lumineux destiné à éclairer une surface, (ii) un support de fixation agencé pour supporter le dispositif d'éclairement et pour pouvoir être fixé sur un plafond, (iii) une électronique de commande pour piloter le dispositif d'éclairement à l'aide d'au moins un signal de commande, (iv) un module LiFi pour moduler l'au moins un signal de commande de l'électronique de commande en fonction d'au moins un protocole de communication réseau et (v) un photodétecteur pour recevoir au moins un signal lumineux, l'électronique de commande, le module LiFi et le photodétecteur étant montés sur ledit support de fixation, ledit support de fixation ayant une forme délimitant une fenêtre d'émission de lumière, le photodétecteur étant agencé en périphérie de la fenêtre d'émission.

Le dispositif d'éclairement est agencé pour pouvoir éclairer une surface située sensiblement en regard dudit dispositif d'éclairement et peut comporter à cet effet une ou plusieurs sources de lumière. Lorsque l'ensemble de télécommunication sans fil est monté sur un plafond ou un faux-plafond, la surface éclairée est située entre ledit plafond ou faux-plafond et un sol d'une part, notamment à l'aplomb de la zone dans laquelle le dispositif d'éclairement est fixé au plafond, et à l'intérieur d'un cône d'éclairage défini par les rayons lumineux émis par le dispositif d'éclairement d'autre part.

La surface ainsi éclairée par l'ensemble de télécommunication sans fil conforme au premier aspect de l'invention définit ainsi une zone à l'intérieur de laquelle un transfert de données numériques est rendu possible par la modulation de l'intensité des rayons lumineux émis par la ou les sources de lumière et selon le principe de la technologie LiFi. L'utilisation d'une telle source de lumière modulée selon le principe de la technologie LiFi permet d'établir une télécommunication dite descendante à l'intérieur de la surface éclairée par la ou les sources de lumière.

Complémentairement, l'invention conforme à son premier aspect est agencée pour établir une communication réseau bidirectionnelle grâce au photodétecteur monté sur le support de fixation de l'ensemble de télécommunication sans fil. Le photodétecteur permet ainsi de détecter un signal optique, dit ascendant, qui serait émis par une autre source de lumière en direction dudit photodétecteur et selon le même principe de modulation de l'intensité lumineuse. L'autre source de lumière ne fait pas partie de l'invention conforme à son premier aspect.

De préférence, l'ensemble est propre à opérer un débit théorique de communication sans fil LiFi supérieur à dix mégabits par seconde, de préférence à quarante mégabits par seconde.

Dans un mode de réalisation préféré de l'invention, le support de fixation comprend une ouverture située à l'aplomb du photodétecteur. Par exemple, le support de fixation ayant une forme délimitant une fenêtre d'émission de lumière, le photodétecteur est agencé en périphérie de la fenêtre. Le photodétecteur est ainsi visible sur la face éclairante du support de fixation.

L'ensemble de télécommunication sans fil conforme au premier aspect de l'invention est monté et/ou fixé solidairement sur le plafond ou le faux-plafond, dans son ensemble et en une seule opération de montage et/ou fixation, grâce au support de fixation sur lequel sont rapportés l'ensemble des composants précités. En effet, comme tous les composants de l'ensemble de télécommunication sans fil conforme au premier aspect de l'invention sont montés sur le support de fixation, alors il suffit de manipuler et monter et/ou fixer ledit support de fixation pour monter et/ou fixer tout l'ensemble de télécommunication sans fil. Les opérations préalables à une telle installation, telles que par exemple le perçage d'une ouverture dans le plafond ou le faux-plafond pour y loger ledit ensemble de télécommunication sans fil, sont ainsi réduites. L'installation ou le démontage de l'ensemble de télécommunication sans fil conforme au premier aspect de l'invention est ainsi facilité car un opérateur réalisant ces opérations peut alors saisir plus facilement ledit ensemble de télécommunication sans fil pour l'introduire dans son logement.

L'ensemble de télécommunication sans fil conforme au premier aspect de l'invention peut notamment être monté et/ou fixé de manière amovible sur le plafond ou le faux-plafond par l'intermédiaire du support de fixation afin de faciliter son installation et son démontage. L'intérêt précédemment décrit de monter et/ou fixer l'ensemble des composants en une opération s'applique dans ce cas-là aux opérations de maintenance des composants.

Éventuellement, l'ensemble de télécommunication sans fil conforme au premier aspect de l'invention peut être monté sur n'importe quelle autre paroi, notamment des cloisons.

Finalement, l'ensemble de télécommunication sans fil conforme au premier aspect de l'invention prend la forme d'un système compact intégrant à la fois une fonction d'éclairage, grâce au dispositif d'éclairement, et une fonction de télécommunication sans fil grâce au module LiFi associé au dispositif d'éclairement. D'une manière générale, tous les composants nécessaires au fonctionnement d'un tel ensemble de télécommunication sans fil, et notamment la ou les sources de lumière, l'électronique de commande, le module LiFi et le photodétecteur, sont montés sur son support de fixation. Le montage de ces composants peut se faire selon tout moyen connu, notamment par rivetage, par vissage, par soudage et/ou par collage.

Selon l'invention conforme à son premier aspect, l'ensemble de télécommunication sans fil prend la forme d'un luminaire LiFi compact dont la ou les sources de lumière sont configurées pour transporter des données numériques codées en fonction de l'intensité lumineuse des rayons lumineux émis par lesdites sources de lumière, et selon un protocole de communication particulier établi par le module LiFi. Le luminaire LiFi intègre à l'intérieur d'un unique support de fixation tous les composants nécessaires à son fonctionnement et au pilotage de la ou des sources de lumière selon le protocole LiFi.

De manière préférentielle, l'ensemble de télécommunication sans fil conforme au premier aspect de l'invention peut comprendre alternativement ou complémentairement au moins un des premiers perfectionnements ci-dessous pris éventuellement en combinaison :
- le support de fixation est de forme générale cylindrique afin de faciliter son insertion au moins partielle dans le plafond ou le faux-plafond sur lequel est monté l'ensemble de télécommunication sans fil conforme au premier aspect de l'invention ;
- le support de fixation est délimité par un bord périphérique extérieur de forme circulaire afin de faciliter son insertion au moins partielle dans le plafond ou le faux-plafond sur lequel est monté l'ensemble de télécommunication sans fil conforme au premier aspect de l'invention ;
- le dispositif d'éclairement, l'électronique de commande, le module LiFi et le photodétecteur sont tous contenus à l'intérieur d'un bord périphérique extérieur du support de fixation afin de faciliter le montage de l'ensemble de télécommunication sans fil conforme au premier aspect de l'invention dans une ouverture d'encastrement réalisée sur le plafond ou le faux-plafond. Plus particulièrement, cette configuration particulière de l'ensemble de télécommunication sans fil conforme au premier aspect de l'invention permet d'insérer les éléments dudit ensemble de télécommunication sans fil à l'intérieur de l'ouverture d'encastrement sans risque d'arrachement ou de collision avec les contours de ladite ouverture d'encastrement. Préférentiellement, une marge périphérique non nulle subsiste entre chaque élément de l'ensemble de télécommunication sans fil conforme au premier aspect de l'invention et un bord latéral extérieur du support de fixation afin de pouvoir réaliser un épaulement de la marge périphérique sur le plafond ou le faux-plafond ;
- le bord périphérique extérieur du support de fixation peut avoir une largeur ou un diamètre sensiblement égal à 350 mm afin d'être facilement préhensible par un opérateur ; quelle que soit cette dimension, il est intéressant de prévoir selon une caractéristique de l'invention que, prise dans le plan du support de fixation, une distance entre le photodétecteur et le dispositif d'éclairement est inférieure ou égale à 200 mm afin d'améliorer, voire maximiser, le recouvrement des zones de couverture dudit dispositif d'éclairement et dudit photodétecteur et de faciliter le fonctionnement bidirectionnel du réseau LiFi;
- le support de fixation comprend une plaque de couverture fixée sur un côté opposé du support de fixation par rapport au module LiFi, ladite plaque de couverture prenant la forme d'un disque de diamètre supérieur à la dimension latérale dudit support de fixation. D'une manière générale, la plaque de couverture permet de couvrir l'ouverture d'encastrement et d'éviter que des particules ou des poussières ne passent au travers de l'ouverture d'encastrement lorsque l'ensemble de télécommunication sans fil conforme au premier aspect de l'invention est monté sur le plafond ou le faux-plafond. Les dimensions latérales de la plaque de couverture sont préférentiellement supérieures aux dimensions latérales de l'ouverture d'encastrement et aux dimensions latérales du support de fixation. Selon une première variante, la plaque de couverture est issue de matière avec le support de fixation. Selon une deuxième variante, la plaque de couverture est rapportée sur le support de fixation et fixée par n'importe quel moyen de fixation. La plaque de couverture a une forme quelconque, par exemple polygonale. La plaque de couverture peut être réalisé dans un ou plusieurs matériaux. Préférentiellement, la plaque de couverture est formée au moins en partie d'un matériau plastique et/ou métallique ;
- l'ensemble de télécommunication sans fil comprend un élément de connexion d'au moins un câble électrique, ledit élément de connexion étant monté sur le support de fixation. L'élément de connexion comprend au moins un récepteur mâle ou femelle agencé pour pouvoir collaborer avec une extrémité mâle ou femelle de l'au moins un câble électrique correspondant afin d'établir une connexion électrique entre ledit câble électrique correspondant et l'ensemble de télécommunication sans fil. L'au moins un câble électrique peut être du type d'un câble d'alimentation électrique relié à un réseau électrique d'une installation électrique. Alternativement ou complémentairement, l'au moins un câble électrique peut aussi être du type d'un câble réseau agencé pour transporter des données numériques depuis ou vers l'ensemble de télécommunication sans fil. Cette configuration avantageuse permet ainsi de connecter ledit ensemble de télécommunication sans fil à un réseau informatique plus vaste, et notamment d'établir une connexion vers internet. Alternativement ou complémentairement, l'élément de connexion peut comprendre au moins un récepteur optique mâle ou femelle agencé pour pouvoir collaborer avec une extrémité mâle ou femelle d'une fibre optique correspondante afin d'établir un couplage optique entre ladite fibre optique correspondante et l'ensemble de télécommunication sans fil et de permettre de transférer des données numériques ;
- l'élément de connexion est situé en périphérie du support de fixation et orienté radialement et vers l'extérieur dudit support de fixation afin de faciliter la connexion du ou des câbles électriques et/ou de la fibre optique. En effet, cette configuration avantageuse permet, lorsque l'ensemble de télécommunication sans fil est partiellement inséré dans l'ouverture d'encastrement, de faciliter la manipulation des câbles électriques présent dans le plafond ou le faux-plafond, ainsi que leur connexion audit ensemble de télécommunication sans fil via ledit élément de connexion qui est alors favorablement orienté dans la direction desdits câbles électriques ;
- alternativement à la configuration précédente, l'élément de connexion est situé en périphérie du support de fixation et orienté de manière sensiblement tangentielle par rapport audit support de fixation. En d'autres termes, une dimension de l'élément de connexion est orientée sensiblement perpendiculairement par rapport à un rayon du support de fixation passant par le centre dudit support de fixation et par un point dudit élément de connexion, de manière à présenter une ouverture par laquelle le ou les câbles de connexion électrique sont connectés selon une direction sensiblement perpendiculaire audit rayon ainsi défini. Cette configuration avantageuse permet, lorsque l'ensemble de télécommunication sans fil est partiellement inséré dans l'ouverture d'encastrement, de faciliter la manipulation des câbles électriques présent dans le plafond ou le faux-plafond, ainsi que leur connexion audit ensemble de télécommunication sans fil via ledit élément de connexion qui est alors favorablement orienté dans la direction desdits câbles électriques, afin que l'au moins un câble électrique soit connecté au niveau dudit élément de connexion selon une direction sensiblement perpendiculaire audit rayon ainsi défini ;
- le support de fixation comprend au moins deux pattes de montage situées en périphérie du support de fixation, lesdites pattes de montage permettant collectivement de fixer ledit ensemble de télécommunication sans fil au plafond ou au faux-plafond. Les pattes de montage permettent ainsi de maintenir l'ensemble de télécommunication sans fil selon une configuration prédéfinie dans l'ouverture d'encastrement. Selon un mode de réalisation, les pattes de montage sont agencées pour pouvoir s'étendre latéralement au-delà de l'ouverture d'encastrement afin de prendre appui sur une face arrière du plafond ou du faux-plafond, ou d'un élément lié audit plafond ou faux-plafond ;
- au moins une des pattes de montage est une patte de montage articulée pour être mobile entre une configuration repliée, permettant de participer à la fixation de l'ensemble de radiocommunication, et une configuration étendue, permettant de faciliter l'insertion de l'ensemble de télécommunication sans fil dans l'ouverture d'encastrement du plafond ou du faux-plafond. La patte de montage est configurée avec des moyens de rappel en position tendant à ramener la patte de montage en configuration repliée. Durant le montage de l'ensemble de télécommunication sans fil dans l'ouverture d'encastrement, l'au moins une patte de montage est forcée en position étendue jusqu'à insertion de l'ensemble de télécommunication sans fil dans l'ouverture d'encastrement sans gêne. Lorsque l'ensemble de télécommunication sans fil est au moins partiellement inséré dans l'ouverture d'encastrement, au moins une partie des pattes de montage articulées est rappelé élastiquement en position repliée afin de jouer son rôle de support dudit l'ensemble de télécommunication sans fil, en collaborant avec le plafond, le faux- plafond ou l'élément lié à l'un d'entre eux ;
- la patte de montage articulée comprend d'une part une partie fixe formée d'un cadre rigide monté sur le support de fixation, ledit cadre rigide comprenant un premier et un deuxième montant latéral, une première portée latérale située sur le premier montant latéral et s'étendant en direction du deuxième montant latéral et une deuxième portée latérale située sur le deuxième montant latéral et s'étendant en direction du premier montant latéral, et d'autre part une partie mobile en rotation autour des première et deuxième portées latérales et formée d'un ressort de torsion supporté par la première portée latérale et la deuxième portée latérale, ledit ressort de torsion s'étendant entre le premier et le deuxième montant latéral, et d'une boucle de montage couplée au ressort de torsion. De manière avantageuse, les première et deuxième portées latérales du cadre sont alignées. Préférentiellement, elles sont coaxiales, définissant collectivement un unique axe de rotation autour duquel le ressort de torsion est maintenu. Préférentiellement encore, les première et deuxième portées latérales du cadre ont des sections transverses identiques. Le ressort de torsion est agencé pour permettre à la patte de montage articulée de prendre plusieurs configurations entre la configuration repliée et la configuration étendue définies précédemment. Complémentairement, le ressort de torsion est agencé pour exercer une force sur le plafond, le faux-plafond ou l'élément lié à l'un d'entre eux lorsque la patte de montage correspondante est configurée dans sa configuration étendue. Plus particulièrement, dans cette configuration étendue, le ressort de torsion exerce une force qui s'oppose au retour de ladite patte de montage articulée dans sa configuration repliée. En d'autres termes encore, le ressort de torsion est agencé pour exercer une force permettant de maintenir - au moins partiellement - l'ensemble de télécommunication sans fil au plafond, au faux-plafond ou à l'élément lié à l'un d'entre eux ;
- la longueur de la première portée latérale de la patte de montage articulée est inférieure à la longueur de la deuxième portée latérale de ladite patte de montage articulée afin de faciliter l'insertion du ressort de torsion sur les première et deuxième portées latérales, notamment en diminuant l'effort à fournir par l'utilisateur pour comprimer le ressort, dans un contexte de montage et/ou de fixation d'un ensemble porteur d'une pluralité de composants et donc lourd qui implique un dimensionnement important du ressort ;
- la longueur de la deuxième portée latérale de la patte de montage articulée est au moins deux fois supérieure à la longueur de la première portée latérale de ladite patte de montage articulée ;
- la longueur de la deuxième portée latérale de la patte de montage articulée est égale au triple de la longueur de la première portée latérale de ladite patte de montage articulée ;
- deux extrémités du ressort de torsion d'au moins une patte de montage articulée sont reliées entre elles et forment en se rejoignant une boucle, également appelée boucle de montage, qui s'étend en saillie par rapport au ressort de torsion et radialement vers l'extérieur dudit ensemble de télécommunication sans fil. Lorsque la patte de montage est configurée dans sa configuration étendue, la boucle de montage s'étend préférentiellement de manière à collaborer avec la face arrière du plafond, du faux-plafond ou de l'élément lié à l'un d'entre eux pour supporter au moins partiellement l'ensemble de télécommunication sans fil. Selon un mode préféré de l'invention, la configuration étendue de la patte de montage articulée correspond à une extension de la boucle de montage radialement à l'extérieur du support de fixation, et préférentiellement encore au-delà de l'ouverture d'encastrement réalisée dans le plafond ou le faux-plafond ;
- au moins une patte de montage articulée comprend un amortisseur situé à une extrémité opposée de la boucle de montage par rapport au ressort de torsion afin d'absorber les chocs, notamment durant l'opération de montage de l'ensemble de télécommunication sans fil sur le plafond ou le faux-plafond ; l'amortisseur est amené à reposer contre la face arrière du plafond dans la configuration étendue de la patte de montage articulée ;
- l'amortisseur de la patte de montage articulée est réalisé dans une matière déformable, tel que par exemple un matériau plastique, un élastomère, un caoutchouc ;
- au moins une des pattes de montage est une patte de montage stationnaire qui s'étend radialement vers l'extérieur du support de fixation, ladite patte de montage stationnaire formant un pivot pour la fixation dudit ensemble de télécommunication sans fil dans le plafond. Cette configuration avantageuse permet de faciliter le montage de l'ensemble de télécommunication sans fil dans l'ouverture d'encastrement, en permettant de réaliser un appui sur un des bords de ladite ouverture d'encastrement avant de poursuivre son insertion et notamment les pattes de montage articulées. Éventuellement, la patte de montage stationnaire comprend des moyens de réglage permettant de régler la hauteur de la patte de montage stationnaire par rapport au support de fixation. Il est ainsi possible d'ajuster le montage de l'ensemble de télécommunication sans fil aux dimensions du plafond ou du faux-plafond - et plus particulièrement leur épaisseur ;
- la patte de montage stationnaire et les au moins deux pattes de montage sont radialement réparties régulièrement autour du support de fixation. Par exemple, dans le cas où l'ensemble de télécommunication sans fil comprend une patte de montage stationnaire et deux pattes de montage articulées, alors lesdites pattes de montage peuvent être réparties à 120°. Alternativement, la patte de montage stationnaire peut être située à proximité des éléments les plus lourds de l'ensemble de télécommunication sans fil, les pattes de montage articulées étant réparties symétriquement autour d'un rayon passant par ladite patte de fixation stationnaire et le centre du support de fixation. Cette configuration avantageuse prend ainsi en compte la distribution des masses sur la surface du support de fixation, et permet de limiter les effets de basculement de l'ensemble de télécommunication sans fil lorsqu'il est monté sur le plafond ou le faux-plafond ;
- le dispositif d'éclairement comprend une source lumineuse de type diode électroluminescente, ou LED. Selon un mode de réalisation préféré, le dispositif d'éclairement comprend une pluralité de sources de type diodes électroluminescentes, toutes les sources étant réparties sur au moins un contour sensiblement circulaire et concentrique, chaque source lumineuse étant angulairement régulièrement espacées. À titre d'exemple non limitatif, un tel ensemble de télécommunication sans fil peut comprendre douze diodes électroluminescentes réparties selon un premier contour circulaire formé par huit diodes électroluminescentes distantes angulairement de 45° des unes des autres, et un deuxième contour circulaire concentrique au premier contour circulaire et formé par quatre diodes électroluminescentes distantes angulairement de 90° des unes des autres, le deuxième contour étant situé à l'intérieur du premier contour ;
- le dispositif d'éclairement comprend avantageusement des composants électroniques permettant de réaliser au moins une conversion tension / courant afin de polariser les sources lumineuses, et plus particulièrement les sources électroluminescentes. Cette configuration permet de localiser le dispositif d'éclairement - et en particulier les composants électroniques - à proximité d'un dissipateur thermique permettant de dissiper les calories produites par les composants électroniques et/ou les sources lumineuses durant leur fonctionnement afin de permettre leur fonctionnement dans des conditions optimales ;
- les sources lumineuses du dispositif d'éclairement peuvent être contrôlées collectivement ou sélectivement, selon les usages recherchés, par l'électronique de commande et/ou le module LiFi. À titre d'exemples non limitatifs, toutes les sources lumineuses peuvent être contrôlées afin de moduler l'émission des rayons lumineux en fonction du protocole réseau LiFi. Alternativement, une première partie des sources lumineuses d'une source LiFi peut être contrôlée afin de moduler l'émission des rayons lumineux en fonction du protocole réseau LiFi, et une deuxième partie des sources lumineuses de ladite source LiFi peut être contrôlée de manière classique, c'est-à-dire sans modulation de l'intensité des rayons lumineux émis. Ainsi, la deuxième partie des sources lumineuses de la source LiFi contribue à éclairer une surface selon un éclairage d'intensité constante et/ou non modulé, tandis que la première partie des sources lumineuses éclaire ladite surface selon un éclairage dont l'intensité est modulée de manière à permettre un transfert de données numériques ;
- l'électronique de commande et le module LiFi sont distincts, c'est-à-dire qu'ils comportent des cartes de circuits imprimés et composant électroniques différentes l'une de l'autre, afin de faciliter la maintenance de l'ensemble de télécommunication sans fil en cas de pannes ou défaillance de composants électroniques de l'électronique de commande et/ou du module LiFi. En effet, il est ainsi possible de réparer voire remplacer l'électronique de commande ou le module LiFi sans impacter respectivement le module LiFi ou l'électronique de commande. Par ailleurs, cette configuration avantageuse permet de mieux répartir spatialement les différents composants électroniques et de mieux contrôler ainsi la dissipation thermique de l'électronique de commande et du module LiFi. Alternativement, l'électronique de commande et le module LiFi peuvent être intégrés au sein d'un même composant électronique afin de réduire l'encombrement global sur le support de fixation. En particulier, un tel composant électronique pourrait prendre une forme annulaire afin de s'intégrer sur le support de fixation de manière périphérique à l'ouverture centrale par laquelle les rayons lumineux sont émis par la source de lumière et afin de mieux répartir le poids de ladite carte électronique sur ledit support de fixations. Dans un tel cas, le composant électronique pourrait avantageusement être du type d'un ASIC afin de programmer sur ledit composant électronique à la fois les fonctions électroniques relative à la commande des sources lumineuses et à la modulation desdites sources lumineuses en fonction du protocole de communication réseau LiFi.
- selon un mode particulier de réalisation, l'ensemble de télécommunication sans fil conforme au premier aspect de l'invention comprend uniquement deux cartes électroniques : la première est dédiée au fonctionnement du dispositif d'éclairement, la deuxième est une carte électronique regroupant les fonctions et au moins une partie des composants du module LiFi, de l'électronique de commande et de l'électronique de commande du photodétecteur ;
- l'électronique de commande est configurée pour moduler l'intensité lumineuse du dispositif d'éclairement en fonction du protocole de communication réseau. En d'autres termes, au moins un signal de commande est généré par l'électronique de commande pour commander la ou les sources de lumière. L'au moins un signal de commande est ainsi modulé de manière à contrôler l'intensité lumineuse des sources de lumière, et plus particulièrement selon le protocole réseau. Il peut s'agir d'une modulation de l'intensité électrique du signal de commande ou d'une modulation en tension. Le module LiFi collabore avec l'électronique de commande pour générer l'au moins un signal de commande, le module LiFi communiquant à l'électronique de commande les informations nécessaires pour coder les données numériques qui doivent être transférées par l'ensemble de télécommunication sans fil. De préférence, toutes les sources de lumière de l'ensemble de télécommunication sans fil sont collectivement contrôlées par l'électronique de commande afin de moduler l'intensité lumineuse des rayons lumineux qu'elles émettent en fonction du protocole réseau ;
- l'ensemble de télécommunication sans fil comprend une électronique de commande du photodétecteur, ladite électronique de commande du photodétecteur étant distincte de l'électronique de commande et/ou du module LiFi afin de faciliter la maintenance de l'ensemble de télécommunication sans fil en cas de pannes ou défaillance de composants électroniques de l'électronique de commande et/ou du module LiFi et/ou de l'électronique de commande du photodétecteur ;
- le photodétecteur est du type d'une photodiode ;
- des composants électroniques de puissance de l'électronique de commande et/ou des composants électroniques du module LiFi sont agencés sur une carte de circuits imprimés respective, en étant situés sur des faces orientées à l'opposé du dispositif d'éclairement afin de faciliter le refroidissement général de l'ensemble de télécommunication sans fil et d'orienter préférentiellement vers une direction opposée au dispositif d'éclairement les calories produites et dissipées par lesdits composants électroniques durant leur fonctionnement, par exemple par effet Joule ;
- les composants électroniques du module LiFi et/ou les composants électroniques de puissance de l'électronique de commande sont agencés sur une carte de circuits imprimés respective, en étant situés sur des faces orientées radialement vers l'extérieur du support de fixation afin de faciliter le refroidissement général de l'ensemble de télécommunication sans fil et d'orienter préférentiellement vers l'extérieur dudit ensemble de télécommunication sans fil les calories produites et dissipées par lesdits composants électroniques durant leur fonctionnement, par exemple par effet Joule.

Selon un deuxième aspect de l'invention, il est proposé l'utilisation de l'ensemble de télécommunication sans fil conforme au premier aspect de l'invention ou à l'un quelconque de ses perfectionnements pour éclairer au moins une partie d'une pièce. Il est ainsi possible de simultanément éclairer la pièce et de permettre un échange de données numériques par l'intermédiaire dudit ensemble de télécommunication sans fil sans ajout supplémentaire d'un autre ensemble de télécommunication sans fil spécifiquement dédié à cet effet. L'ensemble de télécommunication sans fil conforme au premier aspect de l'invention permet ainsi de réduire la pollution électromagnétique liée aux réseaux de télécommunication sans fil connus tels que le WIFI en mutualisant à la fois la fonction d'éclairage et de réseau sans fil au sein d'un même ensemble de télécommunication sans fil compact.

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue en perspective éclatée d'un ensemble de télécommunication sans fil conforme au premier aspect de l'invention ;
- la FIGURE 2 illustre une vue en perspective assemblée d'un ensemble de télécommunication sans fil conforme au premier aspect de l'invention, avec ici un positionnement différent des pattes de montage par rapport à celui illustré sur la figure 1 ;

- la FIGURE 3 illustre une vue en coupe transversale du deuxième exemple de réalisation illustré à la FIGURE 2 et suivant la coupe AA ;
- la FIGURE 4 illustre une vue de détail d'un dispositif d'éclairement d'un ensemble de télécommunication conforme au premier aspect de l'invention ;
- les FIGURES 5A, 5B et 5C illustrent respectivement le cadre rigide d'une patte de montage articulée d'un ensemble de télécommunication conforme au premier aspect de l'invention, le ressort de torsion monté sur ledit cadre rigide et la patte de montage articulée comprenant la boucle de montage ; et
- la FIGURE 6 illustre un ensemble de télécommunication conforme au premier aspect de l'invention monté dans un faux-plafond.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

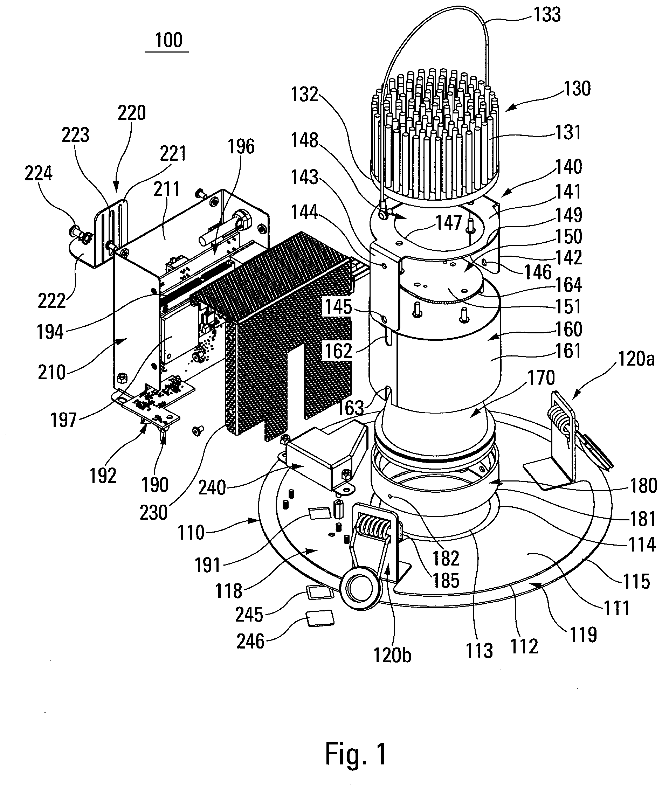

Un ensemble de télécommunication sans fil 100 conforme au premier aspect de l'invention va maintenant être décrit, notamment en se référant aux FIGURES 1, 2 et 3.

De manière synthétique, un tel ensemble de télécommunication sans fil 100 comprend :
- un dispositif d'éclairement 150 pour émettre au moins un rayon lumineux destiné à éclairer une surface ;
- un réflecteur, ou collecteur, 170 pour orienter les rayons lumineux émis par le dispositif d'éclairement 150 dans une direction prédéfinie ;
- une collerette 180 permettant de calibrer radialement l'étendue des rayons lumineux émis par le dispositif d'éclairement 150 ;
- un dissipateur thermique 130 pour dissiper les calories produites par le dispositif d'éclairement 150 durant son fonctionnement ;
- une électronique de commande 196 pour piloter le dispositif d'éclairement 150 à l'aide d'au moins un signal de commande ;
- un module LiFi 194 pour moduler l'au moins un signal de commande de l'électronique de commande 196 en fonction d'au moins un protocole de communication réseau, afin de conformer la lumière émise par le dispositif d'éclairement et transmettre des informations codées par la fréquence de scintillement, invisible à l'œil nu, de cette émission de lumière ;
- un photodétecteur 192 pour recevoir au moins un signal lumineux émis à l'extérieur de l'ensemble de télécommunication sans fil, par exemple par un terminal mobile de communication ;
- des pattes de montage 120, 220 permettant de monter solidairement, et préférentiellement de manière non permanente et reproductible, l'ensemble de télécommunication sans fil 100 sur un plafond ou un faux-plafond non représenté sur les FIGURES 1, 2 et 3 ;
- un support de fixation 110 agencé pour supporter tous les éléments constitutifs dudit ensemble de télécommunication sans fil 100 et énumérés ci-dessus ou ci-après, et notamment le dispositif d'éclairement 150, l'électronique de commande 196, le module LiFi 194 et le photodétecteur 192. Tous les éléments constitutifs de l'ensemble de télécommunication sans fil 100 conforme au premier aspect de l'invention sont monté sur ledit support de fixation 110 par tous moyens connus et non représentés sur les FIGURES, tels que par exemple par vissage, par soudage, par brasage, par collage ou par rivetage.

En référence aux FIGURES 1, 2 et 3, les différents éléments constitutifs de l'ensemble de télécommunication sans fil 100 conforme au premier aspect de l'invention vont maintenant être décrits plus en détail.

Le support de fixation 110 a une forme cylindrique d'épaisseur négligeable devant ses dimensions latérales. Dans l'exemple illustré sur les FIGURES 1 à 3, le support de fixation comprend une plaque de fixation 118 fixée solidairement à une plaque de couverture 119. La plaque de fixation 118 est fixée à la plaque de couverture 119 selon tout moyen de fixation connu, et notamment par rivetage ou par vissage, et préférentiellement encore par collage, soudage ou brasage.

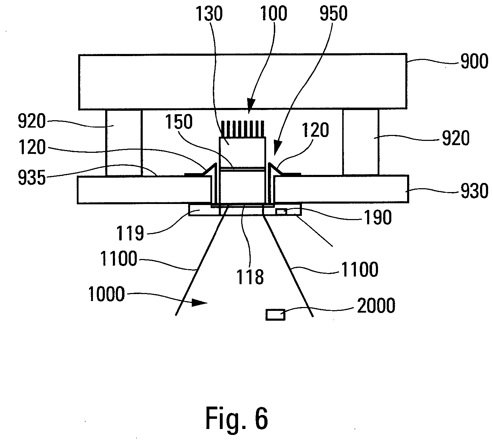

La plaque de fixation 118 permet de monter tous les éléments constitutifs de l'ensemble de télécommunication sans fil 100 à l'intérieur d'un espace restreint qui permet un encastrement facile dudit ensemble de télécommunication à l'intérieur d'une ouverture d'encastrement 950 réalisée dans un plafond 900 ou un faux-plafond 930, tel que visible à titre d'exemple sur la FIGURE 6.

La plaque de fixation 118 est délimitée par un bord périphérique extérieur 112. Le bord périphérique extérieur 112 de la plaque de fixation 118 délimite un espace à l'intérieur duquel tous les éléments constitutifs de l'ensemble de télécommunication sans fil 100 sont intégrés afin de permettre son encastrement dans l'ouverture d'encastrement 950 visible sur la FIGURE 6. Radialement vers l'intérieur, la plaque de fixation 118 est délimitée par un bord intérieur 114. Il en résulte, dans l'exemple illustré, une forme annulaire de la plaque de fixation 118.

D'une manière générale, mais non exclusive, tous les éléments constitutifs de l'ensemble de télécommunication sans fil 100 conforme au premier aspect de l'invention sont fixés sur le support de fixation 110, chaque élément constitutif de l'ensemble de télécommunication sans fil 100 s'étendant latéralement à l'intérieur de l'espace délimité par le bord périphérique extérieur 112 et le bord intérieur 114 de la plaque de fixation 118. Plus particulièrement, le bord périphérique extérieur 112 de la plaque de fixation 118 définit une courbe directrice d'un cylindre s'étendant le long d'une génératrice perpendiculaire à la surface de ladite plaque de fixation 118 et le volume formé par ce cylindre définit le volume à l'intérieur duquel tous les éléments constitutifs de l'ensemble de télécommunication sans fil 100 doivent se situer pour permettre un encastrement facile dudit ensemble de télécommunication sans fil 100 dans l'ouverture d'encastrement 950. Il s'agit bien là d'un objectif recherché par la présente invention conforme à son premier aspect.

Éventuellement, au moins un élément constitutif de l'ensemble de télécommunication sans fil 100 a des dimensions latérales et/ou une implantation à la surface de la plaque de fixation 118 qui le font déborder au-delà du bord périphérique extérieur 112 et/ou en deçà du bord intérieur 114 de la plaque de fixation 118, dès lors qu'il est configuré pour ne pas gêner le montage dans le plafond ou le faux plafond, notamment en ce qu'il peut être articulé pour prendre une position temporaire dans le volume formé par le cylindre du support de fixation lors de l'insertion dans le plafond ou faux plafond.

Latéralement, la forme générale du support de fixation 118 peut être quelconque. Préférentiellement, la forme générale du support de fixation 118 est circulaire ou polygonale. En d'autres termes, le bord périphérique extérieur 112 de la plaque de fixation est préférentiellement circulaire ou polygonal.

La plaque de couverture 119 permet d'obturer l'ouverture d'encastrement 950 lorsque l'ensemble de télécommunication sans fil est monté dans le plafond 900 ou le faux-plafond 930. À cet effet, les dimensions latérales extérieures de la plaque de couverture 119 sont supérieures aux dimensions radiales extérieures de la plaque de fixation 118.

La plaque de couverture 119 est délimitée par un contour périphérique extérieur 115. Le contour périphérique extérieur 115 de la plaque de couverture 119 et le bord périphérique extérieur 112 de la plaque de fixation 118 délimitent collectivement un rebord 119 qui forme un épaulement contre le plafond 900 ou le faux-plafond 930 radialement à l'extérieur de l'ouverture d'encastrement 950 lorsque l'ensemble de télécommunication 100 est monté dans ledit plafond 900 ou faux-plafond 930. Radialement vers l'intérieur, la plaque de couverture 119 est délimitée par un contour intérieur 113 qui définit aussi une ouverture au travers de laquelle les rayons lumineux émis par le dispositif d'éclairement 150 se propagent.

Latéralement, la forme générale de la plaque de couverture 119 peut être quelconque. Préférentiellement, la forme générale de la plaque de couverture 119 est circulaire ou polygonale. En d'autres termes, le bord périphérique extérieur 112 de la plaque de couverture 119 est préférentiellement circulaire ou polygonal.

Alternativement, la plaque de fixation 118 et la plaque de couverture 119 peuvent être issues de matière de manière à former le support de fixation de manière monolithique.

Le support de fixation est au moins en partie former d'un matériau métallique et/ou plastique.

La collerette 180 joue le rôle d'un obturateur radial pour les rayons lumineux émis par le dispositif d'éclairement 150. Dans l'exemple illustré sur la FIGURE 1, la courbe directrice 181 de la collerette 180 a une forme circulaire dont un diamètre est compris entre le diamètre du contour intérieur 113 de la plaque de couverture 119 et le bord intérieur 114 de la plaque de fixation 118.

Éventuellement, la courbe directrice 181 de la collerette 180 peut prendre une forme polygonale.

Alternativement, et afin notamment de former un cône d'éclairement asymétrique pour adapter par exemple ce dernier à la forme d'une pièce dans laquelle l'ensemble de télécommunication sans fil 100 est installé, la courbe directrice 181 de la collerette 180 peut prendre une forme asymétrique.

La collerette 180 est montée de manière concentrique sur le support de fixation 110. Plus particulièrement, elle est en appui sur la partie d'extension radiale intérieure de la plaque de couverture 119 qui s'étend entre le contour intérieur 113 de la plaque de couverture 119 et le bord intérieur 114 de la plaque de fixation 118. Durant l'assemblage de l'ensemble de télécommunication sans fil 100 conforme au premier aspect de l'invention, la collerette est simplement posée sur le support de fixation 110, et il est alors possible de l'indexer angulairement en la faisant tourner par rapport au support de fixation 110. Elle n'est pas directement fixée sur le support de fixation 110 au moment de son montage sur ledit support de fixation 110, mais elle est solidarisée avec d'autres éléments de l'ensemble de télécommunication sans fil 100 comme il sera décrit ultérieurement.

Selon une première variante de réalisation illustrée sur la FIGURE 1, la collerette 180 comprend par ailleurs au moins un filetage 182 dimensionné pour coopérer avec une vis de fixation passant au travers d'une équerre de fixation 185 située angulairement en regard dudit filetage 182. Dans ce cas, les équerres de fixation 185 sont situées radialement à l'extérieur de la collerette 180 et elles sont solidaires du support de fixation 110.

Selon une deuxième variante de réalisation non représentée, la collerette 180 comprend par ailleurs au moins une ouverture permettant chacune de faire passer au travers une vis de fixation collaborant avec une équerre de fixation située angulairement en regard de ladite ouverture 183. Dans ce cas, les équerres de fixation 185 sont situées radialement à l'intérieur de la collerette 180 et elles sont solidaires du support de fixation 110.

Les équerres de fixation 185 peuvent être issues de matière avec la plaque de couverture 119 ou la plaque de fixation 118, ou encore être rapportées et fixées à la plaque de couverture 119 ou à la plaque de fixation 118 par tout moyen.

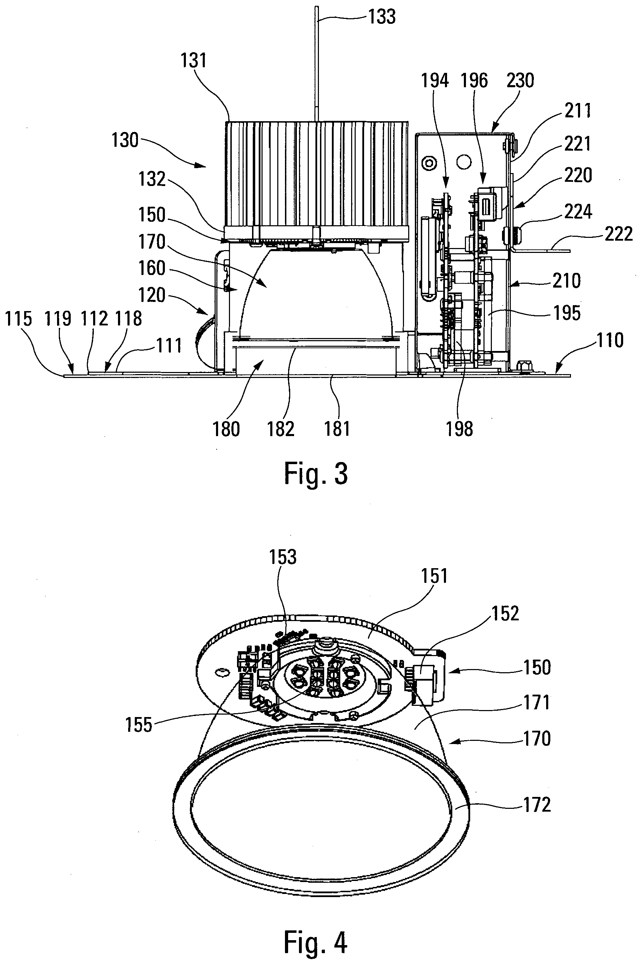

Le réflecteur 170 est en appui contre la collerette 180. À son extrémité supérieure, et préférentiellement à son foyer optique, le dispositif d'éclairement 150 est fixé solidairement audit réflecteur 170. Le réflecteur et le dispositif d'éclairement 150 seront décrits ultérieurement plus en détail, notamment en référence à la FIGURE 4.

L'ensemble de télécommunication sans fil 100 illustré à la FIGURE 1 comprend aussi un carter 160 de forme cylindrique et qui s'étend radialement autour du réflecteur 170 et verticalement au-delà dudit réflecteur 170. Le carter 160 est formé par une tôle 161 cylindrique de faible épaisseur. Préférentiellement le carter est formé dans un matériau métallique. La tôle 161 formant le carter 160 peut alternativement être pleine ou ajourée. En particulier, la tôle 161 formant le carter 160 peut prendre la forme d'un grillage.

Le carter 160 prend appui sur le support de fixation 110. Radialement, le carter 160 est situé à l'extérieur de la collerette 180. Durant l'assemblage de l'ensemble de télécommunication sans fil 100 conforme au premier aspect de l'invention, le carter 160 est simplement posé sur le support de fixation 110, et il est alors possible de l'indexer angulairement en le faisant tourner par rapport au support de fixation 110. Le carter 160 n'est pas directement fixé sur le support de fixation 110 mais il est solidarisé avec d'autres éléments de l'ensemble de télécommunication sans fil 100 comme il sera décrit ultérieurement.

À cet effet, le carter comprend des ouvertures oblongues 162, 163, 164 qui permettent de faire passer une vis au travers afin de fixer le carter 160. Plus particulièrement, le carter 160 comprend quatre ouvertures oblongues réparties en deux groupes de deux ouvertures oblongues, chaque groupe étant situé sur une zone diamétralement opposée dudit carter 160. Comme visible sur la FIGURE 1, pour chaque groupe d'ouvertures oblongues, une première ouverture oblongue 162 est située sur une première extrémité verticale du carter 160, par exemple l'extrémité supérieure, et une deuxième ouverture oblongue 163 est située sur une deuxième extrémité verticale du carter 160, par exemple l'extrémité inférieure dudit carter 160. Les première et deuxième ouvertures oblongues 162, 163 sont préférentiellement alignées verticalement.

Chaque ouverture oblongue 161-164 débouche sur l'extrémité correspondante du carter 160, de sorte à former une ouverture non complètement fermée.

L'ensemble de télécommunication sans fil 100 conforme au premier aspect de l'invention et décrit sur les FIGURES 1 à 3 comprend par ailleurs un étrier de fixation 140 qui permet de réaliser l'assemblage dudit ensemble de télécommunication sans fil 100 sur le support de fixation 110.

L'étrier de fixation 140 est formé préférentiellement d'au moins un matériau métallique.

L'étrier de fixation 140 comprend une plaque supérieure 141 et au moins deux montants latéraux 142, 143 s'étendant en saillie depuis ladite plaque supérieure.

La plaque supérieure 141 de l'étrier de fixation 140 comprend une ouverture centrale 148 délimitée par un contour intérieur 147. Les dimensions et la forme du contour intérieur 147 sont telles que le dispositif d'éclairement 150, et à tout le moins son substrat électronique 151, peut être logé dans l'ouverture centrale 148, préférentiellement sans contact. De manière préférentielle, la forme de l'ouverture centrale 148 correspond à la forme latérale du dispositif d'éclairement 150, et plus particulièrement celle de son substrat électronique 151.

D'une manière générale, la forme du contour extérieur 149 de la plaque supérieure 141 de l'étrier de fixation 140 correspond à la forme d'une section du carter 160. Ainsi, dans le cas où le carter 160 prend la forme d'un cylindre dont la courbe directrice est circulaire, alors le contour extérieur 149 de la plaque supérieure 141 est circulaire d'un diamètre sensiblement égal à celui de la courbe directrice du carter 160.

D'une manière générale, les dimensions latérales et la forme de la plaque supérieure 141 de l'étrier de fixation 140 sont telles qu'elles prolongent les dimensions latérales et la forme du carter 160.

La plaque supérieure 141 de l'étrier de fixation 140 comprend aussi des trous pour l'insertion de vis de fixation destinées à fixer le dissipateur thermique 130 qui sera décrit ultérieurement.

Les au moins deux montants latéraux 142, 143 de l'étrier de fixation 140 permettent de réaliser un enjambement du carter 160 et de réaliser à leur extrémité libre, opposée à la plaque supérieure 141, un appui contre le support de fixation 110. Ainsi, les dimensions verticales de chaque montant latéral 142, 143 sont sensiblement égales à la somme des dimensions verticales de la collerette 180, du déflecteur 170 et du dispositif d'éclairement 150. Par dimension verticale, on entend la dimension de ces composants selon l'axe perpendiculaire au plan du support de fixation 110 lorsqu'ils sont assemblés.

Chaque montant latéral 142, 143 prend la forme d'une patte rectangulaire. Selon une première variante, les montants latéraux 142, 143 et la plaque supérieure 141 de l'étrier de fixation 140 sont issus de matière, de sorte que ledit étrier de fixation 140 est monolithique. Selon une deuxième variante, les montant latéraux 142, 143 sont rapportés à la plaque supérieure 141 et fixés à elle par tout moyen, préférentiellement par soudage ou brasage.

Chaque montant latéral 142, 143 comprend par ailleurs des ouvertures circulaires 144, 145, 146 agencées pour collaborer avec au moins une partie des ouvertures oblongues 162-164 du carter 160. Plus particulièrement, chaque montant latéral 142, 143 comprend au moins une ouverture circulaire 144-146 permettant de faire passer une vis de fixation afin de collaborer avec le carter 160, la collerette 180 et l'équerre de fixation 185 afin d'assembler l'ensemble de télécommunication sans fil conforme au premier aspect de l'invention.

En pratique, seule l'ouverture circulaire 144-146 collaborant avec l'ouverture oblongue 162-164 qui collabore à son tour avec l'équerre de fixation 185 correspondante est nécessaire pour assembler l'ensemble de télécommunication sans fil conforme au premier aspect de l'invention. Cependant, comme visible sur la FIGURE 1, une première ouverture circulaire 144 est située à une première extrémité verticale du montant latéral 142, 143, par exemple l'extrémité supérieure, et une deuxième ouverture circulaire 145, 146 est située sur une deuxième extrémité verticale du montant latéral 142, 143, par exemple l'extrémité inférieure. Les première et deuxième ouvertures circulaires 144, 145 sont préférentiellement alignées verticalement.

Le dissipateur thermique 130 permet de dissiper les calories produites par le dispositif d'éclairement 150 durant son fonctionnement. Les dimensions latérales et la forme générale du dissipateur thermique 130 correspondent à celles du carter 160. Ainsi, dans l'exemple de réalisation illustré aux FIGURES 1-3, le dissipateur thermique 130 prend la forme générale d'un cylindre de section circulaire, dont le diamètre est sensiblement égal au diamètre du carter 160.

Le dissipateur thermique 130 est avantageusement formé au moins en partie d'un matériau conducteur de chaleur afin de mieux extraire les calories produites à proximité du dispositif d'éclairement 150. Préférentiellement, le dissipateur thermique 130 est métallique. Préférentiellement encore, le dissipateur thermique 130 est formé d'aluminium, d'un alliage d'aluminium et/ou comprend du cuivre.

Le dissipateur thermique 130 comprend une base 132 qui est fixée au dispositif d'éclairement 150, et préférentiellement à son substrat électronique 151 afin d'en améliorer les échanges thermiques, et qui est en outre fixée sur la plaque supérieure 141 de l'étrier de fixation 140. Sur la face opposée de la base 132 par rapport au dispositif d'éclairement 150, le dissipateur thermique 130 comprend une forêt de cylindres 131 qui s'étendent en saillie par rapport à la base 132. Les cylindres 131 permettent d'augmenter la surface d'échange entre le dissipateur thermique 130 et l'air ambiant, améliorant ainsi l'efficacité dudit échangeur thermique 130 en favorisant les échanges thermiques entre les cylindres 131 et l'air ambiant. On comprend que cette réalisation du dissipateur thermique avec des ailettes est un exemple non limitatif, et que le dissipateur thermique 130 pourrait comporter à titre d'exemple des nervures espacées les unes des autres en lieu et place de ces cylindres.

L'ensemble de télécommunication sans fil 100 comprend un filin de sécurité 133 fixé solidairement à l'étrier de fixation 140 ou au dissipateur thermique 130 et permettant de retenir l'ensemble de télécommunication sans fil 100 lorsque ledit ensemble de télécommunication sans fil 100 est monté au plafond.

L'ensemble de télécommunication sans fil 100 comprend aussi un module LiFi 194 et une électronique de commande 196 qui permettent collectivement de contrôler le dispositif d'éclairement 150 en fonction d'un protocole réseau afin de moduler l'intensité des rayons lumineux émis par ladite source lumineuse 150 en fonction des données numériques à transmettre par les rayons lumineux émis par le dispositif d'éclairement dans un sens descendant, c'est-à-dire en direction d'un utilisateur disposé dans le champ d'émission des rayons lumineux de l'ensemble de télécommunication selon l'invention.

L'électronique de commande 196 permet de générer un signal de commande en fonction des données numériques transmises et encodées par le module LiFi 194. Le signal de commande est modulé en tension et/ou courant afin de modifier l'état de polarisation électrique du dispositif d'éclairement 150, permettant in fine de moduler l'intensité de l'éclairage produit.

Le module LiFi 194 et l'électronique de commande 196 comportent respectivement une carte de circuits imprimés et des composants électroniques fixés sur cette carte électronique.

Afin de faciliter d'éventuelles opérations de maintenance, l'électronique de commande 196 et le module LiFi 194 sont disposés sur deux supports électroniques, ou carte de circuits imprimés, indépendants.

L'électronique de commande 196 et le module LiFi 194 sont logés dans un boitier 210 qui est fixé solidairement sur le support de fixation 110. Le boitier 210 est fermé par un capot 230. Le boitier 210 et/ou le capot 230 sont préférentiellement métalliques afin de favoriser les échanges thermiques. Tel que cela est notamment visible sur la figure 1, la tôle formant le capot 230 peut être ajourée pour laisser passage à des câbles de transmission agencés entre au moins l'électronique de commande 196 et le dispositif d'éclairement.

Dans l'exemple de réalisation illustré sur les FIGURES 1 à 3, l'électronique de commande 196 et le module LiFi 194 sont logés verticalement dans le boitier 210, c'est-à-dire que leur carte électronique respective est disposée perpendiculairement au plan défini par la surface du support de fixation 110. Alternativement, l'électronique de commande 196 et le module LiFi 194 pourraient être logés horizontalement, c'est-à-dire sensiblement parallèlement à la surface du support de fixation 110. Dans ce cas, la forme des cartes électroniques formant l'électronique de commande 196 et le module LiFi 194 pourraient par exemple être de forme annulaire afin de s'intégrer plus facilement sur ledit support de fixation 110.

Dans le cas où l'électronique de commande 196 et le module LiFi 194 sont logés verticalement, il peut être prévu que les composants électroniques de puissance de l'électronique de commande et/ou des composants électroniques du module LiFi soient agencés à l'opposé du centre du support de fixation, et notamment à l'opposé du dispositif d'éclairement. En d'autres termes, on peut prévoir d'agencer la disposition des composants électroniques les plus sensibles à la chaleur, ou ceux dégageant le plus de chaleur, d'un unique côté de la carte électronique correspondante, et d'orienter la carte de circuits imprimés de sorte que ces composants soient situés sur un côté orienté à l'opposé du dispositif d'éclairement, ou vers l'extérieur du support de fixation. On cherche ainsi à faciliter le refroidissement général de l'ensemble de télécommunication sans fil.

Par ailleurs, afin de favoriser le refroidissement de l'électronique de commande 196 et le module LiFi 194 ou d'en limiter le réchauffement durant leur fonctionnement, des dissipateurs thermiques prenant la forme de plaques 195, 197, 198 thermiquement conductrices peuvent être couplées thermiquement à certains composants électroniques de l'électronique de commande 196 et le module LiFi 194. À titre d'exemple non limitatif, les plaques 195, 197, 198 peuvent être fixées solidairement auxdits composants électroniques devant être refroidis, par collage, notamment via une colle thermique ou par soudage ou brasage.

L'ensemble de télécommunication sans fil 100 illustré aux FIGURES 1 à 3 comprend aussi un photodétecteur 192 permettant de détecter un signal lumineux transportant des données numériques dans un sens ascendant, c'est-à-dire émis depuis un appareil électronique d'un utilisateur et dirigés en direction de l'ensemble de télécommunication sans fil 100 et par exemple à destination d'un réseau informatique extérieur audit ensemble de télécommunication sans fil 100. Le photodétecteur 192 est monté sur sa carte de support électronique 190.

Le photodétecteur 192 et sa carte de support électronique 190 sont logés à l'intérieur d'un capot 240 et fixés solidairement sur le support de fixation 110. Afin de permettre au photodétecteur 192 de détecter un signal lumineux provenant d'en dessous de l'ensemble de télécommunication sans fil 100, le support de fixation 110 comprend de préférence une ouverture 191 située à l'aplomb du photodétecteur 192. L'ouverture 191 est fermée par une vitre 246 maintenue sur le support de fixation par un cadre 245. Le cadre est fixé solidairement au support de fixation 110 par tout moyen de fixation, et préférentiellement par collage.

L'électronique de commande 196 et le module LiFi 194 sont électriquement connectés entre eux, et l'électronique de commande 196 est électriquement connectée au dispositif d'éclairement 150.

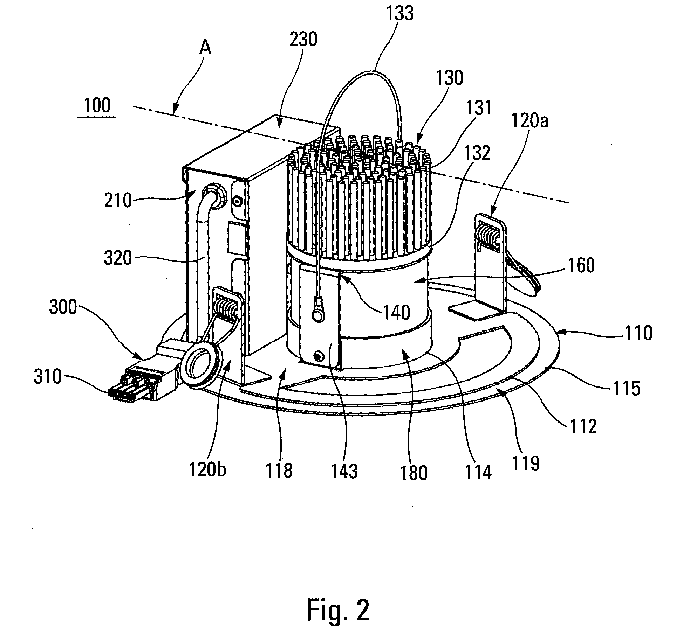

Comme visible sur la FIGURE 2, l'électronique de commande 196 et/ou le module LiFi 194 sont électriquement reliés à un système électrique plus vaste et/ou un réseau informatique par l'intermédiaire d'un élément de connexion 300 qui prend ici la forme d'un connecteur 310 afin d'acheminer à la fois les câbles d'alimentation électrique permettant d'alimenter le dispositif d'éclairement 150, l'électronique de commande 196 et le module LiFi 194 et le photodétecteur 192 associés à son électronique 190 d'une part, et le(s) câble(s) réseau permettant d'interfacer l'ensemble de télécommunication sans fil avec un réseau informatique extérieur, et par exemple internet. L'élément de connexion 300 est électriquement connecté à l'électronique de commande 196 et/ou au module LiFi 194 par l'intermédiaire d'un câble de connexion électrique 320.

Afin de faciliter son installation sur le plafond 900 ou le faux-plafond 930, l'ensemble de télécommunication sans fil 100 comprend des pattes de montage 120, 220 qui seront décrites ultérieurement. Les pattes de montage peuvent être du type articulé ou stationnaire. D'une manière générale, l'ensemble de télécommunication sans fil 100 comprend au moins deux pattes de montage 120, 220 réparties à la périphérie du support de fixation 110. Dans l'exemple illustré à la FIGURE 1, trois pattes de montage 120, 220 sont angulairement régulièrement espacées autour du support de fixation 110, un angle d'environ 120° séparant deux pattes de montage 120, 220 adjacentes. Dans l'exemple illustré à la FIGURE 2, deux pattes de montage articulées 120 sont situées diamétralement opposées par rapport au support de fixation 110, et la patte de montage stationnaire, non visible sur la figure 2, est placée à 90° par rapport auxdites pattes de montage articulées 120.

La FIGURE 4 illustre une source de lumière 150 associée à un réflecteur 170 tels que mis en œuvre dans l'ensemble de télécommunication illustré aux FIGURES 1 à 3. Pour en faciliter la compréhension, le réflecteur 170 est représenté en transparence.

Le dispositif d'éclairement 150 comprend un substrat électronique 151 formé par exemple par une carte électronique à la surface de laquelle des composants électroniques 153 sont montés et électriquement reliés entre eux par des pistes électroniques (non représentées) afin de contrôler l'état de polarisation électrique des sources lumineuses 155.

Le substrat électronique 151 comprend un connecteur 152 permettant d'interfacer le dispositif d'éclairement 150 avec l'électronique de commande 196 afin de transporter l'au moins un signal de commande entre ladite électronique de commande 196 et le dispositif d'éclairement 150.

Les sources lumineuses sont préférentiellement situées au foyer du réflecteur 170.

Dans l'exemple de réalisation illustré sur la FIGURE 4, le dispositif d'éclairement 150 comprend plusieurs sources lumineuses 155, et en particulier elle en comprend douze. Plus particulièrement, les douze sources lumineuses 155 sont réparties selon un premier contour circulaire formé par huit sources lumineuses 155 distantes angulairement d'environ 45° des unes des autres, et selon un deuxième contour circulaire, concentrique au premier contour circulaire et formé par quatre sources lumineuses distantes angulairement d'environ 90° des unes des autres, le deuxième contour étant situé à l'intérieur du premier contour.

De manière avantageuse, les sources lumineuses 155 du dispositif d'éclairement 150 sont du type d'une diode électroluminescente (LED, acronyme anglais pour Luminescent Emitting Diode).

Les sources lumineuses 155 sont préférentiellement prévues pour émettre un rayonnement visible par l'œil humain, c'est-à-dire compris entre 380 nm et 780 nm environ afin de permettre un éclairage de la pièce dans laquelle l'ensemble de télécommunication sans fil 100 est installé.

Le réflecteur 170 est formé par une partie supérieure 171 de forme générale conique et dont la partie la plus fermée est située du côté du dispositif d'éclairement 150, la partie la plus ouverte du réflecteur 170 étant située à l'autre extrémité par rapport à ladite source de lumière 150.

Dans l'exemple illustré sur la FIGURE 4, la courbe directrice du cône 171 est circulaire. Selon la forme recherchée du cône d'éclairement du dispositif d'éclairement 150, la courbe directrice peut prendre une autre forme. En particulier, elle peut être asymétrique ou totalement irrégulière afin d'adapter la forme du cône d'éclairement du dispositif d'éclairement 150 en fonction de la géométrie de la pièce dans laquelle l'ensemble de télécommunication sans fil 100 est installé et/ou de la présence d'autres éléments de télécommunication sans fil 100 situés à proximité.

À son extrémité ouverte, le cône 171 se prolonge sensiblement perpendiculairement par une bague circulaire 172 permettant de poser le réflecteur en appui contre la collerette 180 et par exemple contre un épaulement ici non représenté formé à l'intérieur de celle-ci.

À son extrémité supérieure, le réflecteur 170 comprend des moyens de fixation du dispositif d'éclairement 150, et plus particulièrement du substrat électronique 151. À titre d'exemple non limitatif, le substrat électronique 151 peut être vissé dans le réflecteur 170 ; alternativement, le réflecteur 170 peut comprendre des ergots qui s'emmanchent dans des ouvertures réalisées sur le substrat électronique 151; alternativement encore, le substrat électronique 151 peut être collé sur le réflecteur 170.

Le réflecteur est préférentiellement réalisé dans un matériau métallique et/ou plastique, les parois intérieures du réflecteur 170 étant réfléchissantes par nature, ou par ajout d'un revêtement réfléchissant, afin d'améliorer les capacités d'éclairement du dispositif d'éclairement 150.

Comme décrit précédemment, l'ensemble de télécommunication sans fil 100 est installé sur le plafond 900 ou le faux plafond 930 par l'intermédiaire d'au moins deux pattes de montage 120, 220. Les pattes de montage 120, 220 peuvent être du type d'une patte de montage stationnaire 220 et/ou du type d'une patte de montage articulée 120.

En référence aux FIGURES 1 et 3, une patte de montage stationnaire 220 va maintenant être décrite. D'une manière générale, une patte de montage stationnaire 220 est une patte de montage qui demeure fixe et/ou immobile par rapport au support de fixation 110 durant le montage de l'ensemble de télécommunication sans fil 100 sur le plafond 900 ou le faux-plafond 930.

À cet effet, la patte de montage stationnaire 220 prend la forme d'une équerre en L, formée par un montant d'extension verticale 221 et un montant d'extension radiale 222 situé à une extrémité dudit montant d'extension verticale 221, par exemple son extrémité inférieure. La patte de montage stationnaire 220 est préférentiellement obtenue par pliage d'une tôle.

La patte de montage stationnaire 220 est préférentiellement métallique.

Dans l'exemple de réalisation illustré aux FIGURES 1 et 3, la patte de montage stationnaire 220 est fixée solidairement à une face externe 211 du capot 210, c'est-à-dire une face orientée radialement vers l'extérieur du support de fixation 110. La patte de montage stationnaire 220 est fixée par l'intermédiaire d'une vis de fixation 224 la traversant et collaborant avec un alésage fileté réalisé sur la face arrière 211. Afin de permettre un ajustement de sa position par rapport au capot, et donc par rapport à la surface du support de fixation, le montant d'extension verticale 221 de la patte de montage stationnaire 220 peut comprendre une ouverture oblongue 223 d'orientation verticale, la position étant figée par serrage de la vis de fixation 224.

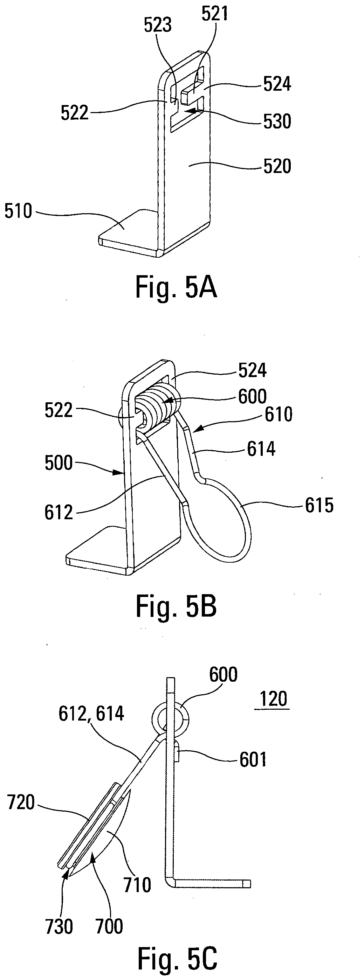

En référence aux FIGURES 5A, 5B et 5C, un exemple de réalisation d'une patte de montage articulée 120 va maintenant être décrite. Une telle patte de montage articulée comprend un cadre rigide 500, et une partie mobile formée principalement par un ressort de torsion 600.

Le cadre rigide 500 en L est formé par une portée d'extension horizontale 510 et une portée d'extension verticale 520 prolongeant sensiblement perpendiculairement la portée d'extension horizontale. Le cadre rigide 500 est agencé pour être fixé solidairement au support de fixation 110, notamment par soudage, brasage ou rivetage au niveau de sa portée d'extension horizontale 510. Le cadre rigide peut avantageusement être obtenu par pliage d'une tôle. Le cadre rigide 500 est préférentiellement métallique.

Plus particulièrement, la portée d'extension verticale 520 du cadre rigide 500 comprend une ouverture 530 au moins délimitée latéralement par un premier 522 et un deuxième 524 montant latéral, chaque montant latéral portant une portée latérale s'étendant en direction de l'autre montant latéral.

Une première portée latérale 523 située sur le premier montant latéral 522 s'étend en direction du deuxième montant latéral 524 et une deuxième portée latérale 521 située sur le deuxième montant latéral 524 et s'étendant en direction du premier montant latéral 522.

Le ressort de torsion 600 comporte un ressort hélicoïdal dont une première extrémité forme une patte d'appui 601 et dont la deuxième extrémité est prolongée perpendiculairement à l'axe du ressort pour former une boucle de montage 610. Dans l'exemple de réalisation illustré sur les FIGURES 5A-5C, la boucle de montage 610 comporte deux bras 612, 614 qui se rejoignent à leur extrémité opposée pour former un logement de réception d'un amortisseur 700, tel que cela sera décrit ci-après. Un premier bras 612 est formé directement dans le prolongement de la deuxième extrémité du ressort hélicoïdal et le deuxième bras 614 est replié en direction de la première extrémité du ressort, en présentant une patte pliée à l'intérieur du ressort, sensiblement parallèlement à l'axe du ressort.

Le ressort de torsion 600 est logé dans l'ouverture 530 et il est supporté collectivement par la première portée latérale 523 et la deuxième portée latérale 521, ledit ressort de torsion 600 s'étendant entre le premier 522 et le deuxième montant latéral 524 en étant inséré autour des portées latérales. La boucle de montage 610 du ressort de torsion 600 est de la sorte mobile en rotation autour des première 523 et deuxième 521 portées latérales.

Tel que cela est visible sur la FIGURE 5a, la longueur de la première portée latérale 523 est inférieure à la longueur de la deuxième portée latérale 521. Notamment, la longueur de la deuxième portée latérale 521 peut être au moins deux fois supérieure à la longueur de la première portée latérale, et par exemple être égale au triple de la longueur de la première portée latérale. Cette différence de longueur des portées latérales, étant entendu que l'addition des longueurs des portées latérales doit être suffisamment grande pour que le ressort ne s'échappe pas sous contraintes, permet de favoriser l'enfilement du ressort, c'est-à-dire de permettre un montage du ressort dans le cadre rigide qui nécessite un effort de compression moindre pour l'utilisateur. Ceci est particulièrement avantageux dans la présente invention puisque les ressorts des pattes de fixation permettent le maintien en position dans le plafond ou faux plafond du support de fixation, et que ce support de fixation est alourdi par la présence de tous les composants embarqués sur le support de fixation selon le premier aspect de l'invention, ce qui implique un dimensionnement important des ressorts.

Le ressort de torsion 600 est dans un premier temps enfilé autour de la deuxième portée latérale 521, en faisant porter la patte en bout du deuxième bras 614 du ressort contre cette deuxième portée latérale 521. Le ressort de torsion est enfilé selon un axe incliné par rapport à la direction principale d'allongement de la deuxième portée latérale, du fait de la présence du cadre rigide, et notamment de la première portée latérale 523 située sur le premier montant latéral 522. Il convient alors de comprimer le ressort hélicoïdal, dans le sens de l'enfoncement vers le deuxième montant latéral 524 pour permettre de faire passer la deuxième extrémité du ressort hélicoïdal par l'ouverture ménagée entre les deux portées latérales 521,523 et positionner le ressort hélicoïdal parallèlement à l'axe d'allongement des portées latérales. L'effort à fournir pour comprimer le ressort est alors moindre puisque la longueur de la deuxième portée latérale est faible. On comprend que la course de compression du ressort est de l'ordre de quelques pour cent (%) alors qu'elle pourrait être proche de 50% si les portées latérales étaient de longueur équivalente.

Le montage du ressort sur le cadre rigide est réalisé de sorte que le ressort de torsion est disposé dans l'alignement des portées latérales dans l'ouverture 530 et que la boucle de montage 610 s'étend d'un côté du cadre rigide en L 500, et plus particulièrement vers l'extérieur du support de fixation 110.

Un amortisseur 700 est disposé dans la boucle de montage 610, à l'opposé du ressort de torsion 600, afin de réduire les chocs durant l'installation de l'ensemble de télécommunication sans fil 100 sur le plafond 900 ou le faux-plafond 930. Dans l'exemple illustré aux FIGURES 1 et 5C, l'amortisseur a une forme générale circulaire et dont l'épaisseur est plus importante au niveau de sa région centrale qu'au niveau de sa région périphérique. De manière avantageuse, l'amortisseur 700 comprend aussi une gorge circonférentielle 730 pour permettre l'insertion des bras 612, 614 de la boucle de montage 610 autour de l'amortisseur 700 et la fixation de cet amortisseur.

La FIGURE 6 illustre un ensemble de télécommunication sans fil 100 conforme au premier aspect de l'invention et tel qu'il est monté dans un faux plafond 930. Le faux-plafond est suspendu à un plafond 900 par l'intermédiaire de chevrons 920. Une ouverture d'encastrement 950 est réalisée dans le faux-plafond 930 afin de permettre l'encastrement de l'ensemble de télécommunication sans fil 100. On comprend qu'un montage équivalent pourrait être réalisé directement dans le plafond 900.

Le montage se fait par une insertion initiale de la patte de montage stationnaire 220 dans l'ouverture d'encastrement 950. La présence du montant d'extension radiale 222 implique une insertion en biais, en enserrant le bord du faux plafond par ce montant d'extension radiale 222 et la plaque de couverture 119. Lorsque le montant d'extension radiale 222 est en appui sur la face arrière du faux plafond, c'est-à-dire la face tournée à l'intérieur du faux plafond, l'ensemble de télécommunication sans fil est basculé autour d'un axe de rotation passant par le ou les points de contact de ce montant d'extension radiale et du faux plafond.

Dans sa position naturelle, la patte de montage articulée 120 est orientée vers le bas, comme illustré sur les FIGURES 1 et 5C. Cette configuration correspond à une configuration repliée. A ce stade de l'opération d'installation de l'ensemble de télécommunication sans fil 100 sur le plafond 900 ou le faux-plafond 930, la patte de montage articulée 120 est relevée pour prendre une configuration étendue dans laquelle la boucle de montage est sensiblement parallèle à la portée d'extension verticale 520 du cadre rigide 500, de manière à faciliter l'insertion dudit ensemble de télécommunication sans fil 100 dans l'ouverture d'encastrement 950 et afin que la boucle de montage 610 soit située au-dessus de la surface d'appui 935 formée par la face arrière dudit plafond 900 ou faux-plafond 930. Lorsque l'ensemble de télécommunication sans fil 100 est introduit au travers de l'ouverture d'encastrement 950, alors les pattes de montage articulée 120 peuvent être relâchées. Le ressort de torsion 600 exerce alors une force sur la boucle de montage 610 pour la ramener dans sa position d'origine, pointant vers le support de fixation. La réaction de cette force sur la surface d'appui 935 du plafond 900 ou faux-plafond 930 est donc orientée vers le haut et permet ainsi de s'opposer à la chute de l'ensemble de télécommunication sans fil 100.

Une fois en position, l'ensemble de télécommunication sans fil 100 est ainsi suspendu au plafond 900 ou au faux-plafond 930. La plaque de couverture 119 s'étend radialement au-delà de l'ouverture d'encastrement 950 afin de l'obstruer.

En fonctionnement, l'ensemble de télécommunication sans fil 100 conforme au premier aspect de l'invention génère ainsi un cône de lumière 1000 délimité latéralement par les rayons extrêmes 1100. Comme décrit précédemment, l'étendue radiale du cône est prédéfinie par les formes et dimensions de la collerette 180 et/ou du réflecteur 170. À l'intérieur de ce cône de lumière, la modulation de l'intensité de la lumière émise par le dispositif d'éclairement 150 permet de transférer des données numériques selon un flux dit descendant entre ledit élément de télécommunication sans fil 100 et un récepteur 2000 capable de détecter les variations d'intensité lumineuse de ladite source de lumière 150, conformément aux principes de la technologie LiFi.

Si le récepteur 2000 comprend aussi un photoémetteur LiFi, du type d'une diode infrarouge par exemple, alors ce dernier peut aussi communiquer avec l'ensemble de télécommunication sans fil 100, et plus particulièrement avec le photodétecteur 192, afin de transférer des données numériques vers ledit ensemble de télécommunication sans fil 100 et selon un flux dit montant.

Ainsi l'ensemble de télécommunication sans fil 100 prend la forme astucieuse d'un luminaire LiFi compact à l'intérieur duquel tous les éléments nécessaires à l'éclairage d'une pièce de vie et tous ceux nécessaire à l'établissement d'une communication réseau bidirectionnelle sont réunis.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Ensemble de télécommunication sans fil (100) comprenant :
- un dispositif d'éclairement (150) pour émettre au moins un rayon lumineux destiné à éclairer une surface ;
- un support de fixation (110) agencé pour supporter le dispositif d'éclairement (150) et pour pouvoir être fixé sur un plafond (900) ;
- une électronique de commande (196) pour piloter le dispositif d'éclairement (150) à l'aide d'au moins un signal de commande ;
- un module LiFi (194) pour moduler l'au moins un signal de commande de l'électronique de commande (196) en fonction d'au moins un protocole de communication réseau ;
- un photodétecteur (192) pour recevoir au moins un signal lumineux ;
dans lequel l'électronique de commande (196), le module LiFi (194) et le photodétecteur (192) sont montés sur ledit support de fixation (110), **caractérisé en ce que** ledit support de fixation (110) a une forme délimitant une fenêtre d'émission de lumière, le photodétecteur (192) étant agencé en périphérie de la fenêtre d'émission.

2. Ensemble de télécommunication sans fil (100) selon la revendication précédente, **caractérisé en ce que** le support de fixation (110) comprend une ouverture (191) située à l'aplomb du photodétecteur (192).

3. Ensemble de télécommunication sans fil (100) selon l'une ou l'autre des revendications précédentes, **caractérisé en ce que** le dispositif d'éclairement (150), l'électronique de commande (196), le module LiFi (194) et le photodétecteur (192) sont tous contenus à l'intérieur d'un bord périphérique extérieur (112) du support de fixation (110).

4. Ensemble de télécommunication sans fil (100) selon la revendication précédente, **caractérisé en ce que**, prise dans le plan du support de fixation, une distance entre le photodétecteur (192) et le dispositif d'éclairement (150) est inférieure ou égale à 200 mm.

5. Ensemble de télécommunication sans fil (100) selon la revendication précédente, **caractérisé en ce que** le support de fixation (110) comprend une plaque de couverture (119) fixée sur un côté opposé du support de fixation (110) par rapport au module LiFi (194), ladite plaque de couverture (119) prenant la forme d'un disque de diamètre supérieur à la dimension latérale dudit support de fixation (110).

6. Ensemble de télécommunication sans fil (100) selon l'une quelconque des revendications précédentes, **caractérisé en ce que** le support de fixation (110) comprend au moins deux pattes de montage (120, 220) situées en périphérie du support de fixation, lesdites pattes de montage (120, 220) permettant collectivement de fixer ledit ensemble de télécommunication sans fil (100) au plafond (900).

7. Ensemble de télécommunication sans fil (100) selon la revendication précédente, **caractérisé en ce qu'**au moins une des pattes de montage (120, 220) est une patte de montage articulée (120) mobile entre une configuration repliée et une configuration étendue.

8. Ensemble de télécommunication sans fil (100) selon la revendication 6 ou 7, **caractérisée en ce qu'**au moins une des pattes de montage (120, 220) est une patte de montage stationnaire (220) qui s'étend radialement vers l'extérieur du support de fixation (110), ladite patte de montage stationnaire (220) formant un pivot pour la fixation dudit ensemble de télécommunication sans fil (100) dans le plafond (900).

9. Ensemble de télécommunication sans fil (100) selon l'une quelconque des revendications précédentes, **caractérisé en ce que** la patte de montage stationnaire (220) et les au moins deux pattes de montage (120, 220) sont radialement réparties régulièrement autour du support de fixation (110).

10. Ensemble de télécommunication sans fil (100) selon l'une quelconque des revendications précédentes, **caractérisé en ce que** l'électronique de commande (196) et le module LiFi (194) sont distincts.

11. Ensemble de télécommunication sans fil (100) selon l'une quelconque des revendications précédentes, **caractérisé en ce que** l'électronique de commande (196) est configurée pour moduler l'intensité lumineuse du dispositif d'éclairement (150) en fonction du protocole de communication réseau.

12. Ensemble de télécommunication sans fil (100) selon l'une quelconque des revendications précédentes, **caractérisé en ce qu'**il comprend une électronique de commande (190) du photodétecteur (192), ladite électronique de commande (190) du photodétecteur (192) étant distincte de l'électronique de commande (196) et du module LiFi (194).

13. Ensemble de télécommunication sans fil (100) selon l'une quelconque des revendications précédentes, **caractérisé en ce que** l'ensemble est propre à opérer un débit théorique de communication sans fil LIFI supérieur à dix mégabits par seconde, de préférence à quarante mégabits par seconde.

14. Utilisation de l'ensemble de télécommunication sans fil (100) selon l'une quelconque des revendications précédentes pour éclairer au moins une partie d'une pièce et pour communiquer avec un appareil (2000).

## Patentansprüche

1. Drahtloses Kommunikationssystem (100), umfassend:
• eine Beleuchtungsvorrichtung (150) zum Emittieren von mindestens einem Lichtstrahl, um eine Fläche zu beleuchten;
• eine Befestigungshalterung (110), die so ausgelegt ist, dass sie die Beleuchtungsvorrichtung (150) trägt und an einer Decke (900) montiert werden kann;
• eine Steuerelektronik (196) zum Ansteuern der Beleuchtungsvorrichtung (150) mittels mindestens eines Steuersignals;
• ein LiFi-Modul (194) zum Modulieren des mindestens einen Steuersignals der Steuerelektronik (196) gemäß mindestens einem Netzwerkkommunikationsprotokoll;
• einen Photodetektor (192) zum Empfangen von mindestens einem Lichtsignal;
**dadurch gekennzeichnet, dass** die Steuerelektronik (196), das LiFi-Modul (194) und der Photodetektor (192) an der Befestigungshalterung (110) montiert sind, und weiterhin **dadurch gekennzeichnet, dass** die Befestigungshalterung (110) eine Form hat, die ein Lichtemissionsfenster definiert, wobei der Photodetektor (192) am Rand des Lichtemissionsfensters angeordnet ist.

2. Drahtloses Kommunikationssystem (100) nach dem vorherigen Anspruch, **dadurch gekennzeichnet, dass** die Befestigungshalterung (110) eine Öffnung (191) umfasst, die sich direkt über dem Photodetektor (192) befindet.

3. Drahtloses Kommunikationssystem (100) nach dem vorherigen Anspruch, **dadurch gekennzeichnet, dass** die Beleuchtungsvorrichtung (150), die Steuerelektronik (196), das LiFi-Modul (194) und der Photodetektor (192) alle innerhalb eines äußeren Randbereichs (112) der Befestigungshalterung (110) untergebracht sind.

4. Drahtloses Kommunikationssystem (100) nach dem vorherigen Anspruch, **dadurch gekennzeichnet, dass** der Abstand zwischen dem Photodetektor (192) und der Beleuchtungsvorrichtung (150), gemessen in der Ebene der Befestigungshalterung, kleiner oder gleich 200 mm ist.

5. Drahtloses Kommunikationssystem (100) nach dem vorherigen Anspruch, **dadurch gekennzeichnet, dass** die Befestigungshalterung (110) eine Abdeckplatte (119) umfasst, die auf einer dem LiFi-Modul (194) gegenüberliegenden Seite der Befestigungshalterung (110) angebracht ist, wobei die Abdeckplatte (119) die Form einer Scheibe mit einem Durchmesser hat, der größer ist als die seitliche Abmessung der Befestigungshalterung (110).

6. Drahtloses Kommunikationssystem (100) nach einem der vorherigen Ansprüche, **dadurch gekennzeichnet, dass** die Befestigungshalterung (110) mindestens zwei Montageklammern (120, 220) umfasst, die sich am Rand der Befestigungshalterung befinden, wobei die Montageklammern (120, 220) zusammen das drahtlose Kommunikationssystem (100) an der Decke (900) befestigen können.

7. Drahtloses Kommunikationssystem (100) nach dem vorherigen Anspruch, **dadurch gekennzeichnet, dass** mindestens eine der Montageklammern (120, 220) eine bewegliche Montageklammer (120) ist, die zwischen einer eingeklappten und einer ausgeklappten Konfiguration beweglich ist.

8. Drahtloses Kommunikationssystem (100) nach Anspruch 6 oder 7, **dadurch gekennzeichnet, dass** mindestens eine der Montageklammern (120, 220) eine stationäre Montageklammer (220) ist, die radial nach außen von der Befestigungshalterung (110) ragt, wobei die stationäre Montageklammer (220) einen Drehpunkt für die Befestigung des drahtlosen Kommunikationssystems (100) an der Decke (900) bildet.

9. Drahtloses Kommunikationssystem (100) nach einem der vorherigen Ansprüche, **dadurch gekennzeichnet, dass** die stationäre Montageklammer (220) und die mindestens zwei Montageklammern (120, 220) gleichmäßig radial um die Befestigungshalterung (110) verteilt sind.

10. Drahtloses Kommunikationssystem (100) nach einem der vorherigen Ansprüche, **dadurch gekennzeichnet, dass** die Steuerelektronik (196) und das LiFi-Modul (194) separate Komponenten sind.

11. Drahtloses Kommunikationssystem (100) nach einem der vorherigen Ansprüche, **dadurch gekennzeichnet, dass** die Steuerelektronik (196) so konfiguriert ist, dass sie die Lichtintensität der Beleuchtungsvorrichtung (150) gemäß dem Netzwerkkommunikationsprotokoll moduliert.

12. Drahtloses Kommunikationssystem (100) nach einem der vorherigen Ansprüche, **dadurch gekennzeichnet, dass** es eine Steuerelektronik (190) für den Photodetektor (192) umfasst, wobei diese Steuerelektronik (190) für den Photodetektor (192) von der Steuerelektronik (196) und dem LiFi-Modul (194) getrennt ist.

13. Drahtloses Kommunikationssystem (100) nach einem der vorherigen Ansprüche, **dadurch gekennzeichnet, dass** das System für einen theoretischen drahtlosen LiFi-Kommunikationsdurchsatz von mehr als zehn Megabit pro Sekunde, vorzugsweise vierzig Megabit pro Sekunde, ausgelegt ist.

14. Verwendung des drahtlosen Kommunikationssystems (100) nach einem der vorherigen Ansprüche zur Beleuchtung von mindestens einem Teil eines Raumes und zur Kommunikation mit einem Gerät (2000).

## Claims

1. Wireless communication assembly (100) comprising:
• a lighting device (150) for emitting at least one light beam to illuminate a surface;
• a mounting support (110) configured to support the lighting device (150) and to be mountable on a ceiling (900);
• control electronics (196) for driving the lighting device (150) using at least one control signal;
• a LiFi module (194) for modulating the at least one control signal of the control electronics (196) based on at least one network communication protocol;
• a photodetector (192) for receiving at least one light signal;
**characterized in that** the control electronics (196), the LiFi module (194), and the photodetector (192) are mounted on said mounting support (110), and further **characterized in that** said mounting support (110) has a shape defining a light emission window, with the photodetector (192) arranged at the periphery of the light emission window.

2. Wireless communication assembly (100) according to the preceding claim, **characterized in that** the mounting support (110) comprises an opening (191) located directly above the photodetector (192).

3. Wireless communication assembly (100) according to the preceding claim, **characterized in that** the lighting device (150), the control electronics (196), the LiFi module (194), and the photodetector (192) are all contained within an outer peripheral edge (112) of the mounting support (110).

4. Wireless communication assembly (100) according to the preceding claim, **characterized in that**, when taken in the plane of the mounting support, a distance between the photodetector (192) and the lighting device (150) is less than or equal to 200 mm.

5. Wireless communication assembly (100) according to the preceding claim, **characterized in that** the mounting support (110) comprises a cover plate (119) attached to a side opposite the mounting support (110) relative to the LiFi module (194), said cover plate (119) having the form of a disk with a diameter larger than the lateral dimension of said mounting support (110).

6. Wireless communication assembly (100) according to any of the preceding claims, **characterized in that** the mounting support (110) comprises at least two mounting brackets (120, 220) located on the periphery of the mounting support, said mounting brackets (120, 220) collectively enabling the wireless communication assembly (100) to be affixed to the ceiling (900).

7. Wireless communication assembly (100) according to the preceding claim, **characterized in that** at least one of the mounting brackets (120, 220) is an articulated mounting bracket (120) movable between a folded configuration and an extended configuration.

8. Wireless communication assembly (100) according to claim 6 or 7, **characterized in that** at least one of the mounting brackets (120, 220) is a stationary mounting bracket (220) that extends radially outward from the mounting support (110), said stationary mounting bracket (220) forming a pivot point for fixing the wireless communication assembly (100) to the ceiling (900).

9. Wireless communication assembly (100) according to any of the preceding claims, **characterized in that** the stationary mounting bracket (220) and the at least two mounting brackets (120, 220) are evenly distributed radially around the mounting support (110).

10. Wireless communication assembly (100) according to any of the preceding claims, **characterized in that** the control electronics (196) and the LiFi module (194) are separate components.

11. Wireless communication assembly (100) according to any of the preceding claims, **characterized in that** the control electronics (196) are configured to modulate the light intensity of the lighting device (150) based on the network communication protocol.

12. Wireless communication assembly (100) according to any of the preceding claims, **characterized in that** it includes control electronics (190) for the photodetector (192), said control electronics (190) for the photodetector (192) being separate from the control electronics (196) and the LiFi module (194).

13. Wireless communication assembly (100) according to any of the preceding claims, **characterized in that** the assembly is configured to operate at a theoretical LiFi wireless communication rate exceeding ten megabits per second, preferably at forty megabits per second.

14. Use of the wireless communication assembly (100) according to any of the preceding claims to illuminate at least part of a room and to communicate with a device (2000).
